# FASCICULE DE BREVET EUROPEEN

(11) **EP 3 333 659 B1**
(45) Date de publication et mention de la délivrance du brevet: **17.08.2022**
(21) Numéro de dépôt: 17205531.1
(22) Date de dépôt: 05.12.2017
(51) Int. Cl.: G05B 19/418, G06F 21/10

(54) **PROCÉDÉ DE GESTION DE FONCTIONNALITÉS OPTIONNELLES DANS UN SYSTÈME DE VISSAGE, SYSTÈME, CONCENTRATEUR ET PRODUIT PROGRAMME D'ORDINATEUR CORRESPONDANT**
VERWALTUNGSVERFAHREN VON OPTIONALEN FUNKTIONEN IN EINEM VERSCHRAUBUNGSSYSTEM, SYSTEM, KONZENTRATOR UND ENTSPRECHENDES COMPUTERPROGRAMMPRODUKT
METHOD FOR MANAGING OPTIONAL FEATURES IN A SCREWING SYSTEM, SYSTEM, CONCENTRATOR AND CORRESPONDING COMPUTER PROGRAM PRODUCT

(30) Priorité: 09.12.2016 FR 1662262
(43) Date de publication de la demande: 13.06.2018
(73) Titulaire: Etablissements Georges Renault, 44800 Saint Herblain (FR)
(72) Inventeur: MACQUET, Laurent, 44240 La Chapelle Sur Erdre (FR); BUTSTRAEN, Gatien, 44000 Nantes (FR); BOCQUET, Nicolas, 44800 Saint Herblain (FR)
(74) Mandataire: Vidon Brevets & Stratégie

(56) Documents cités:
- EP-A1- 3 032 447
- US-A1- 2011 296 402

## Description

### 1. Domaine de l'invention

Le domaine de l'invention est celui de l'outillage industriel, et en particulier du vissage, destiné notamment à l'équipement d'usines ou de chaînes de production, par exemple, dans le domaine de l'automobile ou de l'aéronautique.

Plus précisément, l'invention concerne l'optimisation de l'utilisation et du contrôle de ces outillages, notamment de visseuses, pour les adapter aux besoins des utilisateurs, à l'aide de fonctions optionnelles.

### 2. Art antérieur

Le contexte de l'invention est notamment celui de la production d'automobiles. Les usines dédiées à ce type de production intègrent des chaines d'assemblage permettant de déplacer les véhicules, ou éléments de véhicules, au travers de postes de travail, chacun de ces postes étant destiné au montage d'un composant pour progressivement constituer un véhicule complet.

Chaque poste de travail comporte les outillages spécifiques et nécessaires au montage du composant dont elle est en charge de l'assemblage ou de la transformation. Ces outillages peuvent en particulier être des visseuses destinées à réaliser le serrage de vis.

Par ailleurs les exigences de productivité et de qualité toujours croissantes ont poussé les systèmes de vissage vers plus de sophistication.

Ces systèmes de vissage sont structurellement constitué par :
- une visseuse destinée à entraîner la vis, cette visseuse peut être portée par un opérateur ou fixée sur une structure automatisée, ou encore elles peuvent être alimentées par un câble ou une batterie ; et
- un contrôleur qui, suivant les exigences de production, autorise la visseuse à fonctionner avec des paramètres de production prédéterminés, et/ou recueille les résultats de vissage générés par la visseuse et les transmet à un système d'enregistrement de la qualité de l'usine. Pour une visseuse alimentée par câble, le contrôleur intègre l'alimentation de puissance de cette visseuse.

Le développement de visseuses a amené le développement de contrôleurs d'une part plus compacts car dépourvus d'alimentation de puissance, d'autre part ayant la capacité de contrôler plusieurs visseuses par des moyens radios. Ces contrôleurs sont appelés « station ».

Il est aussi envisagé dans le futur des contrôleurs virtuels, par exemple sous la forme d'ordinateurs industriels supportant le programme de contrôle des visseuses.

Ce type de moyens, contrôleurs, stations ou contrôleurs virtuels est désigné « concentrateur » dans la suite de la description.

Dans une autre approche, le concentrateur peut être intégré dans la visseuse et communiquer avec le réseau par moyens radio et/ou via un point d'accès relié au réseau.

Ces concentrateurs sont reliés, grâce au réseau informatique de l'usine, par exemple de type Ethernet, à un système de gestion du fonctionnement de la chaîne de production. Ce système peut être un automate industriel, un serveur ou encore un ordinateur. Ce système est appelé « gestionnaire » dans la suite de la description.

Dans le cas de moyens de production moins structurés qu'une chaîne d'assemblage automobile, le système de vissage peut ne pas être relié à un système informatique. Il pourra toutefois être mis en communication, en fonction des exigences de production, avec un moyen de transfert d'information par un opérateur. Ce moyen pourra être constitué par exemple par une carte mémoire connectable sur le concentrateur ou communiquant par moyen radio de courte distance, par exemple de type NFC, ou encore une tablette ou un ordinateur portable connecté de façon filaire ou radio.

Ainsi un « gestionnaire » peut transférer des informations ou des ordres vers un groupe d'un ou plusieurs concentrateurs, et recevoir des informations depuis un tel groupe de un ou plusieurs concentrateurs. Le cas échéant, plusieurs gestionnaires peuvent être en relation avec plusieurs groupes de concentrateurs.

On appelle par la suite « équipement de production » un élément en charge d'une action dans le cadre d'une chaîne de production où il peut notamment s'agir d'une visseuse, fixe ou portable, d'un accessoire lié à cette visseuse, par exemple, un lecteur de codes barres ou un transpondeur de localisation, ou un accessoire connecté au concentrateur de façon directe ou par l'intermédiaire de la visseuse, par exemple, une imprimante ou un boîtier à douilles.

Un concentrateur permet de distribuer des ordres, ou commandes, aux équipements de production, et de récupérer et transférer les informations sur les opérations effectuées par ceux-ci vers les « gestionnaires ».

On sait que les équipements de production sont aujourd'hui très précis, et que l'on peut contrôler notamment différents aspects du vissage (par exemple vitesse, angle, couple...). Il est également possible de contrôler une synchronisation entre plusieurs équipements. On peut encore contrôler que l'accessoire sélectionné est le bon et/ou que l'outil agit sur la bonne vis. Par ailleurs, les équipements de production sont capables de fournir des informations sur l'opération effectuée permettant le contrôle de qualité et la traçabilité. Ces données peuvent être stockées par le gestionnaire.

Les postes de travail mentionnés plus haut peuvent avoir des exigences particulières en fonction de l'opération d'assemblage à y réaliser. Pour répondre à ces exigences, des fonctionnalités logicielles particulières sont mises en œuvre, celle-ci constitue des options logicielles acquises ou non et gérées par les services des méthodes de l'entreprise.

Il peut aussi arriver qu'une chaîne de production doive évoluer en fonction d'un changement du véhicule à produire. Dans ce cas, les moyens de vissage, options logicielles comprises, doivent pouvoir être redistribués sur la chaine d'assemblage en fonction des exigences de production.

Ainsi, les équipements de production et les concentrateurs disposent, ou peuvent disposer d'un nombre très élevé de fonctionnalités, mises à disposition des utilisateurs par le fabricant.

Toutes ces fonctionnalités ne sont cependant pas nécessaires pour toutes les utilisations, ou ne le sont pas en permanence. Les fabricants proposent donc parfois des mises à disposition optionnelles de ces fonctionnalités, à la demande des utilisateurs.

On connaît deux approches pour la mise à disposition de fonctionnalité existent aujourd'hui :
- une première approche prévoit la mise en œuvre d'une carte mémoire connectable sur le concentrateur, ou clé électronique, portant une mémoire et contenant un lot de programmes de fonctionnalités autorisées et devant être connectée en permanence sur le concentrateur. Le client achète la carte mémoire ou clé contenant la fonctionnalité dont il a besoin, et peut ensuite l'utiliser. Un inconvénient majeur de cette solution est que le client paie parfois également pour des fonctionnalités dont il n'a pas besoin. De plus si une nouvelle fonctionnalité est requise et qu'elle n'est pas présente dans le lot de la carte mémoire ou clé en cours d'utilisation, il doit acheter une nouvelle carte mémoire et remplacer la précédente. De plus les fonctionnalités qui ne sont pas utilisées dans la carte mémoire ne peuvent pas être utilisées dans un autre concentrateur, compte tenu qu'elles sont prisonnières de la carte mémoire et que cette carte mémoire doit demeurer sur le concentrateur. Enfin commander une nouvelle carte mémoire ou clé pour obtenir une nouvelle fonctionnalité peut prendre du temps et être pénalisant pour la production ;
- Une deuxième approche peut consister à acheter des fonctionnalités sous la forme d'un code d'activation à rentrer dans le concentrateur, ce qui permet de débloquer une fonctionnalité qui est préinstallée dans le concentrateur. L'inconvénient est que cette fonctionnalité est là aussi prisonnière du concentrateur sur laquelle elle a été installée et ne peut être transférée sur un autre concentrateur. En cas de panne du concentrateur, l'usage de la fonctionnalité ne peut être récupéré car l'activation de cette fonctionnalité n'est valable que pour le concentrateur sur lequel elle a été installée.

On connaît également, du document de brevet EP 3 032 447 A1 au nom de la
demanderesse, une technique de distribution de licences vers différents concentrateurs, via un concentrateur serveur de licences, afin de permettre l'activation de certaines fonctionnalités également préinstallées dans chacun des concentrateurs. Celle-ci présente le même type d'inconvénients.

Il existe donc un besoin important d'une nouvelle approche de la mise en œuvre d'un accès aux différentes fonctionnalités optionnelles disponibles pour un système de vissage, qui soit plus simple et plus rapide à mettre en œuvre (si possible de façon quasi-instantanée), et aisément contrôlable par l'utilisateur.

### 3. Caractéristiques principales et optionnelles de l'invention

Celle-ci est obtenue à l'aide d'un procédé de gestion de fonctionnalités optionnelles dans un système de vissage selon la revendication 1 et à un système de vissage selon la revendication 7.

Ainsi, selon l'invention, la gestion des fonctionnalités est particulièrement simple, et permet des mises en place et des retraits de fonctionnalités immédiates sur un concentrateur, en particulier du fait que deux concentrateurs peuvent se transférer directement ou indirectement des jetons, éventuellement sans passer par des intermédiaires de centralisation et de contrôle, pour s'adapter à un besoin immédiat d'un équipement de production, en particulier une visseuse ayant besoin d'une programmation et/ou d'un séquençage d'une opération de vissage spécifique.

Ces fonctionnalités optionnelles sont présentes, mais non activées, dans les concentrateurs. Il n'est donc pas nécessaire de les télécharger et/ou les installer, et le cas échéant les paramétrer, lorsque l'on en a besoin. Il suffit de les activer, ou les débloquer, en allouant le nombre de jetons requis.

Cette approche est particulièrement efficace et adaptée aux usines et chaînes de production, qui ont généralement des exigences fortes en termes de réactivité, et pour lesquelles les techniques classiques de gestion de licences ne sont pas acceptables, et peuvent entrainer des pertes importantes, par exemple si une visseuse ne peut pas être utilisée pendant plusieurs heures ou journées, du fait d'une fonctionnalité indisponible.

Elle permet en outre une intervention très rapide par un opérateur, localement, entre deux concentrateurs, sans qu'il soit impératif d'en référer à un contrôleur central.

Des caractéristiques optionnelles du procédé et du système sont listées dans les revendications 2 à 6 et les revendications 8 à 14 respectivement.

Ainsi, selon un mode de réalisation particulier du système de vissage, au moins un dispositif gestionnaire du parc de concentrateurs dispose d'une première mémoire de stockage apte à stocker des jetons indifférenciés, et chacun des concentrateurs est associé à une deuxième mémoire de stockage de jetons apte à échanger des jetons d'une part avec ladite première mémoire électronique et d'autre part avec ladite deuxième mémoire d'un autre concentrateur.

Les concentrateurs sont ainsi équipés de moyens de contrôle des échanges de jetons pouvant communiquer avec un gestionnaire, mais également directement avec un autre concentrateur, indépendamment du gestionnaire, pour un échange direct de jetons.

Selon un autre mode de réalisation particulier du système de vissage, ledit gestionnaire peut notamment appartenir au groupe comprenant :
- les automates industriels ;
- les serveurs ;
- les ordinateurs ;
- les cartes mémoires ;
- les tablettes ;
- les clés USB ;
- les concentrateurs.

L'invention concernant en particulier la mise en oeuvre de visseuses, lesdites fonctionnalités comprennent notamment des fonctionnalités de programmation et/ou de séquençage d'une opération de vissage.

Selon un mode de réalisation particulier du procédé, lesdites fonctionnalités peuvent notamment appartenir au groupe comprenant :
- l'activation d'au moins un équipement de production ;
- les stratégies de vissage, définissant une séquence d'étapes, définies chacune par un couple, une vitesse et/ou un angle de vissage ;
- les nombres maximaux d'étapes pour une stratégie de vissage ;
- les nombres maximaux de stratégies de vissage disponibles ;
- au moins un séquençage d'un ensemble d'opérations de vissage ;
- au moins une synchronisation de vissage entre au moins deux outils de vissage ;
- les opérations de traçabilité d'une opération de vissage et/ou d'un ensemble d'opérations de vissage ;
- les opérations d'analyse et/ou de contrôle d'une opération de vissage et/ou d'un ensemble d'opérations de vissage ;
- les modifications de la capacité de stockage en mémoire ;
- la personnalisation à un protocole de communication spécifique.

Selon un mode de réalisation particulier du système de vissage, ledit concentrateur présente une interface homme-machine permettant l'activation d'une desdites fonctionnalités par un opérateur.

L'opérateur peut donc agir directement, via le concentrateur (indépendamment d'un gestionnaire), pour l'activation d'une fonctionnalité, et le cas échéant pour l'arbitrage de l'attribution de jetons et/ou l'échange de jetons avec un autre concentrateur ou un gestionnaire.

Selon un autre mode de réalisation particulier du système de vissage, ledit concentrateur permet une activation d'une desdites fonctionnalités par ledit gestionnaire.

Ainsi, le gestionnaire ou le concentrateur peuvent agir sur l'activation d'une fonctionnalité, de façon décentralisée ou centralisée respectivement. Le cas échéant, on peut prévoir que l'activation de certaines fonctionnalités particulières relève uniquement d'un gestionnaire ou d'un concentrateur.

Selon différents modes de réalisation du système de vissage, ledit transfert de jetons est effectué entre au moins un gestionnaire portant ladite première mémoire électronique et au moins un concentrateur portant ladite deuxième mémoire électronique grâce à une liaison filaire, radio et/ou sans contact.

Selon un autre mode de réalisation particulier du système de vissage, ladite deuxième mémoire associée à un concentrateur donné est amovible, de façon à pouvoir être montée sur un concentrateur de remplacement, en cas de défaillance dudit concentrateur donné.

A nouveau, ceci permet une intervention quasi immédiate, par un opérateur, sans appel à un système centralisé, et sans difficulté liée à l'attribution d'une fonctionnalité à un élément spécifiquement identifié.

Selon un mode de réalisation particulier du procédé, chacun desdits jetons portent une date de péremption et/ou une durée d'utilisation maximale, au-delà de laquelle il devient sans valeur.

Selon un autre mode de réalisation particulier du procédé, chacun desdits jetons peuvent porter une date de blocage de transfert et/ou un nombre de transferts maximal, au-delà duquel il ne peut plus être transféré d'une part d'une deuxième mémoire de concentrateur vers ladite première mémoire et/ou d'autre part vers ladite deuxième mémoire d'un autre concentrateur.

Ceci permet de gérer simplement la mise à jour et le renouvellement des jetons. Bien sûr, un mécanisme d'avertissement peut être prévu, un laps de temps prédéterminé avant les échéances, pour que l'opérateur ou le gestionnaire vérifie qu'il dispose de jetons de remplacement, et s'en procure de nouveaux en cas de besoin.

Selon encore un autre mode de réalisation particulier du procédé, on prévoit une étape de stockage, dans une unité de gestion centralisée, d'une table d'attribution desdits jetons à chacun desdits concentrateurs et/ou à chacune desdites fonctionnalités, et/ou de disponibilité de jetons dans chacun desdits concentrateurs.

Ceci permet de suivre, globalement, les attributions, ainsi que les péremptions, des jetons, de gérer le stock de ceux-ci, et de reconstruire la distribution des fonctionnalités, en cas de défaillance ou de destruction d'un ou plusieurs éléments du système.

L'invention concerne également un concentrateur d'un tel système de vissage comprenant des moyens d'activation/désactivation desdites fonctionnalités optionnelles, ces opérations créditant ou débitant ladite deuxième mémoire de stockage de jetons.

Selon un mode de réalisation particulier de l'invention, un tel concentrateur est associé à une deuxième mémoire de stockage de jetons et en ce qu'il comprend des moyens de gestion de jetons aptes à échanger des jetons d'une part avec une première mémoire électronique d'un dispositif gestionnaire dudit parc de concentrateurs et d'autre part avec ladite deuxième mémoire d'un autre concentrateur.

L'invention concerne encore un produit programme d'ordinateur, comprenant des instructions de code de programme pour la mise en oeuvre du procédé décrit ci-dessus, lorsque ledit programme est exécuté sur un ordinateur, ainsi qu'un médium de stockage lisible par ordinateur et non transitoire, stockant un tel produit programme d'ordinateur.

### 4. Liste des figures

D'autres caractéristiques et avantages de l'invention apparaîtront plus clairement à la lecture de la description suivante d'un mode de réalisation, donné à titre de simple exemple illustratif non limitatif, et des dessins annexés parmi lesquels :
- la figure 1 illustre schématiquement un système sur lequel peut être mis en œuvre le procédé de l'invention ;
- la figure 2 illustre schématiquement un exemple de structure de données d'un jeton selon un mode de réalisation de l'invention ;
- la figure 3 est un organigramme simplifié de la mise en œuvre d'un mode de réalisation du procédé de l'invention ;
- la figure 4 illustre la possibilité de modification d'attribution de fonctionnalités, dans un concentrateur ;
- les figures 5A et 5B présentent la possibilité d'échange de jetons entre deux concentrateurs ;
- la figure 6 illustre la gestion d'un cas de panne d'un concentrateur.

### 5. Description d'un mode de réalisation de l'invention

### 5.1 Exemple de système mettant en œuvre l'invention

L'invention s'applique donc à la mise en œuvre optimisée d'un ensemble d'outillages électriques, notamment de visseuses, par exemple dans une chaîne de production (ou, le cas échéant, plusieurs chaînes de production).

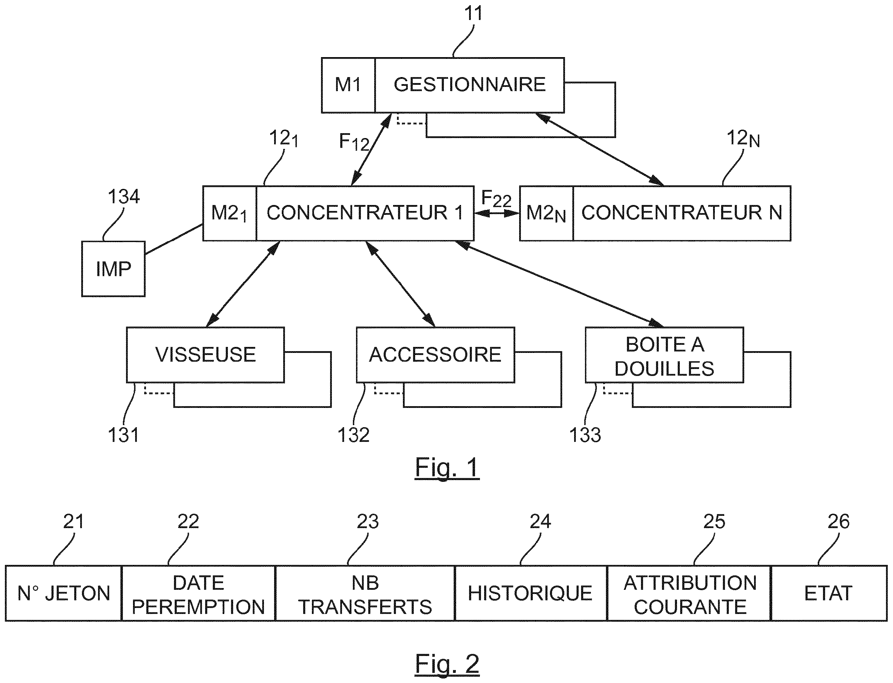

Comme illustré sur la figure 1 de façon schématique, la chaîne de production est associée à un gestionnaire 11, qui peut notamment être un serveur, un ordinateur ou un automate, voire un dispositif équipé d'une mémoire et de moyens d'échanges de données.

Ce gestionnaire 11 peut, par exemple, être un moyen centralisé contrôlant la production, et effectuant un stockage de données correspondantes, ainsi que, si nécessaire, les opérations de statistiques de contrôle qualité et de traçabilité. Il peut notamment enregistrer les données fournies par les équipements de production.

Le cas échéant, plusieurs gestionnaires peuvent être présents, et être reliés entre eux et échanger des données.

Les gestionnaires 11 peuvent posséder, en particulier, une mémoire de stockage M1, apte à stocker des jetons, selon le mécanisme qui sera décrit plus en détail par la suite.

Le gestionnaire 11 est associé à plusieurs concentrateurs 12₁, ... , 12_{N} qui sont notamment équipés d'une mémoire M2₁ à M2_{N} aptes à stocker des jetons. Les mémoires M1 et M2 sont aptes à stocker et échanger des jetons, selon un protocole adapté et sécurisé.

Le gestionnaire peut communiquer avec les concentrateurs via des liaisons filaires, radio ou sans contact. Il en est de même pour les concentrateurs entre eux.

Des moyens et /ou algorithmes de sécurisation des transactions connus de l'homme du métier de ce domaine peuvent ainsi être mise en œuvre, pour garantir au moins un des aspects suivants :
- identification et signature d'un jeton ;
- unicité et validité d'un transfert ;
- contre-mesure antifraude et copie et utilisation multiple d'un jeton.

Chaque concentrateur 12 peut contrôler un ou plusieurs équipements de production, tels qu'une visseuse 131, fixe ou portable, un ou plusieurs accessoires 132 liés à la visseuse, par exemple un lecteur de codes-barres ou un transpondeur de localisation, ou encore un accessoire connecté au concentrateur 12, par exemple une imprimante 134 ou un boîtier à douilles 133.

Dans une variante le concentrateur peut être intégré dans la visseuse.

Les systèmes de vissage sont aptes à appliquer sur les vis à serrer des stratégies ou « recette de vissage », elles-mêmes définies par des paramètres d'utilisation.

Les paramètres d'utilisation sont gérés par le contrôleur et définissent le fonctionnement de la visseuse pendant tout le travail réalisé par l'opérateur. Le contrôleur est généralement connecté à un réseau interne à l'unité de production pour la réception des recettes de vissage et autres paramètres nécessaires à la bonne utilisation de l'outil sur le poste de travail.

Les paramètres peuvent être directement programmés sur le contrôleur ou transmis au contrôleur via les réseaux informatiques dédiés à la gestion de production auxquels est relié le contrôleur.

Ainsi, il est possible d'adapter la recette de vissage aux exigences définies par le bureau d'étude ayant conçu la pièce à assembler.

L'adaptation peut par exemple concerner des paramètres tels que :
- le serrage au couple ;
- le serrage à l'angle ;
- le serrage à la limite élastique de la vis ;
- le serrage avec détection accostage de la vis ;
- etc.

D'autres fonctionnalités peuvent être utilisées telles que :
- la possibilité de séquencer ou d'ordonnancer les serrages incluant des changements de stratégie d'un vissage à l'autre, d'inclure des actions intermédiaires etc.
- l'asservissement du système de vissage à un système de localisation conditionnant le positionnement de la visseuse sur la bonne vis avant d'autoriser le vissage avec une stratégie adaptée ;
- le conditionnement du fonctionnement de la visseuse à l'utilisation et la détection du bon accessoire de vissage tel que douille ou renvoi d'axe ;
- l'exportation sur les réseaux informatiques dédiés à la gestion de production des résultats de serrage (couple, angle, courant, etc.) ;
- l'utilisation de protocoles de communication particuliers.

### 5.2 Rappel du principe général de l'invention

L'invention propose donc une solution simple et efficace pour la gestion de fonctionnalités optionnelles pour les équipements de production et/ou les concentrateurs. Ces fonctionnalités optionnelles peuvent notamment appartenir au groupe suivant :
- l'activation d'au moins un équipement de production ;
- les stratégies de vissage, définissant une séquence d'étapes, définies chacune par un couple, une vitesse et/ou un angle de vissage ;
- les nombres maximaux d'étapes pour une stratégie de vissage ;
- les nombres maximaux de stratégies de vissage disponibles ;
- au moins un séquençage d'un ensemble d'opérations de vissage ;
- au moins une synchronisation de vissage entre au moins deux outils de vissage ;
- les opérations de traçabilité d'une opération de vissage et/ou d'un ensemble d'opérations de vissage ;
- les opérations d'analyse et/ou de contrôle d'une opération de vissage et/ou d'un ensemble d'opérations de vissage ;
- les modifications de la capacité de stockage en mémoire ;
- la personnalisation à un protocole de communication spécifique ;
- le traitement des données de traçabilité ;
- la mise à disposition d'indicateurs de performance et qualité de production ;
- la maintenance prédictive.

Selon l'invention, chacune de ces fonctionnalités est embarquée, c'est-à-dire présente, dans l'équipement ou le concentrateur dès l'origine (ou le cas échéant via une mise à jour) mais n'est pas activée, par défaut. Un poids, ou une valeur, prédéfini est affecté à chaque fonctionnalité, sous la forme d'un nombre d'unités de valeur, ou jetons. Ainsi, l'utilisateur connaît simplement la valeur de chaque fonctionnalité, et peut choisir de l'activer ou non, en lui allouant le nombre de jetons requis. Pour cela, il doit bien sûr disposer d'un stock de jetons, qui est stocké dans la mémoire M1 du gestionnaire 11 ou du concentrateur 12₁ ou d'un autre concentrateur, et qu'il s'est préalablement procuré auprès du fabricant.

Ces jetons sont indifférenciés, c'est-à-dire qu'ils ne sont pas attribués ou associés de façon définitive, ni à une fonctionnalité particulière, ou un type de fonctionnalité ni à un concentrateur particulier. L'utilisateur choisit lui-même, sans intervention externe, l'utilisation qu'il fait de ces jetons, c'est-à-dire leur attribution et une fonctionnalité donnée, et une éventuelle réattribution, par exemple, une stratégie de vissage pourra être valorisée à cinq jetons, alors qu'un protocole de traçabilité pourra être valorisé à huit jetons.

La valorisation des fonctionnalités de vissage permet ainsi à l'utilisateur une grande flexibilité d'usage. Il a à sa disposition un nombre de jetons dont il peut disposer à sa guise, pour les distribuer entre diverses utilisations et sur les équipements pour lesquels c'est souhaitable à un instant donné. Il est en effet possible, et aisé, de transférer des jetons, d'une fonctionnalité à une autre et/ou d'un équipement à un autre.

Le gestionnaire 11 peut gérer une table d'allocation T1, associant par exemple à chaque concentrateur :
- une liste des fonctionnalités actuellement allouées ;
- un nombre de jetons immobilisés en conséquence ;
- un nombre de jetons disponibles ;

Ceci peut notamment permettre d'une part un suivi global en temps réel et d'autre part une reconstruction, en cas de défaillance d'un concentrateur ou de sa mémoire, par exemple.

La figure 2 illustre schématiquement la structure d'informations d'un jeton.

Il comprend tout d'abord une signature unique 21 qui garantit l'origine du jeton et certifie l'émission du jeton par le fabricant et dont l'authenticité peut être vérifiée par les mémoires M1 et M2 (ou plus précisément un algorithme de contrôle associé).

Un champ 26, par exemple binaire, peut indiquer l'état du jeton, qui peut être :
- « disponible », c'est-à-dire non affecté actuellement à une fonctionnalité, et donc disponible pour être affecté à une fonctionnalité ou être transféré vers une autre mémoire.
- « utilisé », c'est-à-dire affecté actuellement à une fonctionnalité, et donc ni utilisable pour une autre fonctionnalité, ni transférable.

Il peut comprendre également une date de péremption 22, correspondant par exemple à une période de deux ans, au-delà de laquelle il n'est plus actif ou transférable. Il peut également prévoir la présence d'un compteur 23 de nombre de transferts et/ou de changement d'attribution de fonctionnalités, qui peut être associé à un seuil maximal prédéfini, au-delà duquel le jeton devient également inactif ou intransférable.

Enfin, dans certains modes de réalisation, le jeton peut contenir un historique 24 de son utilisation, permettant la traçabilité et/ou une réactivation de fonctionnalités, en cas de défaillance. De même, un champ 25 mémorisant l'attribution courante (équipement et fonctionnalité) peut être prévu.

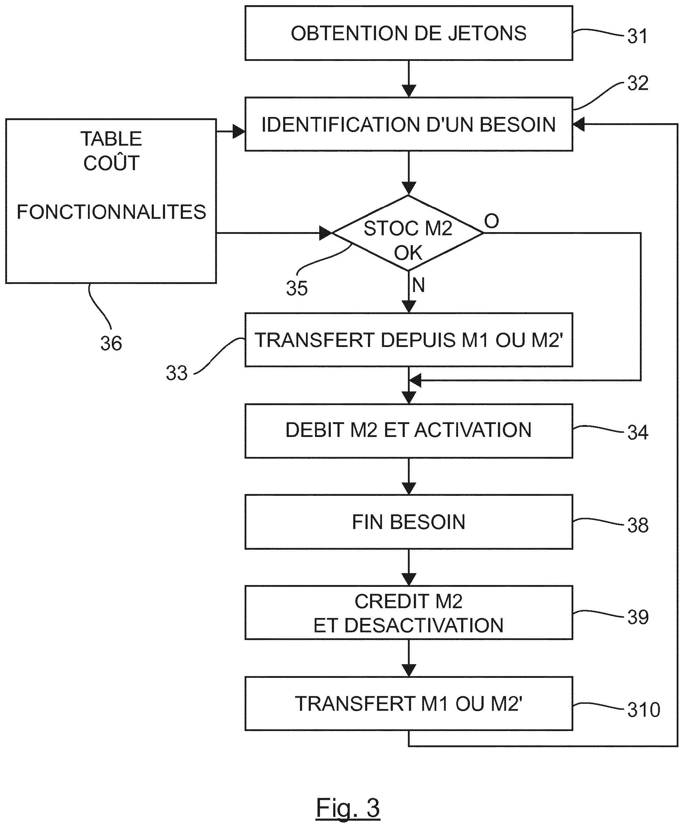

Un exemple de procédé de mise en œuvre est illustré, de façon simplifiée, par l'organigramme de la figure 3.

Dans un premier temps, l'utilisateur doit donc obtenir un lot de jetons (31), auprès du fabricant des outillages ou d'un de ses représentants agréés. Cette opération peut, par exemple, s'effectuer de façon électronique, notamment via internet, l'utilisateur recevra directement dans la mémoire M1 du gestionnaire, ou dans la mémoire M2, M2' d'un des concentrateurs, un lot, ou ensemble, de jetons qu'il a commandés. Il est notamment possible que les jetons soient fournis sous la forme d'un objet physique, telle qu'une mémoire, une clé USB ou une carte mémoire à puce, pouvant communiquer avec le concentrateur, par exemple, sans contact et pour y déverser le lot de jetons. Ces jetons seront par la même stockés dans la mémoire du concentrateur.

Plus généralement, les échanges de jetons entre le gestionnaire et le concentrateur, ou les concentrateurs entre eux, peuvent être mis en œuvre par l'intermédiaire :
- des liaisons filaires, par exemple :
   - Ethernet ;
   - USB;
   - RS 232 ;
- des liaisons radio ; et/ou
- des liaisons sans contact, par exemple :
   - NFC;
   - RFID;

On notera ici qu'une simple carte à puce munie d'une mémoire, par exemple d'une étiquette RFID, peut constituer un gestionnaire simplifié, contenant une mémoire M1, et échangeant des jetons avec les mémoires M2 des concentrateurs.

Ensuite, l'utilisateur identifie et sélectionne la ou les fonctionnalités qu'il souhaite, pour chaque concentrateur et/ou chaque équipement (32). En fonction de cette sélection, le nombre de jetons associé à la ou les fonctionnalités requises est débité (34) de la mémoire M2 du concentrateur devant activer la fonctionnalité. En d'autres termes, les jetons correspondant passent d'un état « disponible » à un état « utilisé ». Selon une variante, les jetons sont transférés d'une zone de la mémoire identifiée comme contenant des jetons disponibles vers une zone identifiée comme contenant des jetons utilisés, c'est-à-dire affectés à une fonctionnalité.

Ceci entraîne l'activation dans celui-ci de la fonctionnalité sélectionnée.

Bien sûr, ces opérations de débit 34 ne sont possibles que si le nombre de jetons requis est disponible dans la mémoire M2. Il y a donc une opération 35 de contrôle de disponibilité du nombre de jetons, en fonction de la valeur en jetons de chaque fonctionnalité définie dans une table 36. Si ce n'est pas le cas, la demande d'activation de fonctionnalité est rejetée. Un transfert 33 de jetons peut être effectué, depuis la mémoire M1 du gestionnaire ou une mémoire M2' d'un autre concentrateur, pour que la mémoire M2 dispose du nombre de jetons requis (le concentrateur peut également effectué des arbitrages dans l'allocation de ses propres jetons, comme expliqué par la suite).

Lorsque le besoin d'une ou plusieurs fonctionnalités dans le concentrateur n'existe plus, ou s'avère moins prioritaire qu'une autre fonctionnalité (38), on désactive (39) la fonctionnalité, puis les jetons peuvent être libérés et mis à disposition pour l'activation d'une autre fonctionnalité, dans la mémoire M2. Ces jetons sont alors à nouveau disponibles, pour un autre besoin (32). Ils peuvent également être transférés (310) vers la mémoire M1 du gestionnaire ou la mémoire M2' d'un autre concentrateur.

L'utilisation de jetons indifférenciés permet ainsi une très grande souplesse d'utilisation et d'adaptation des fonctionnalités en fonction des besoins de l'utilisateur, à plusieurs niveaux.

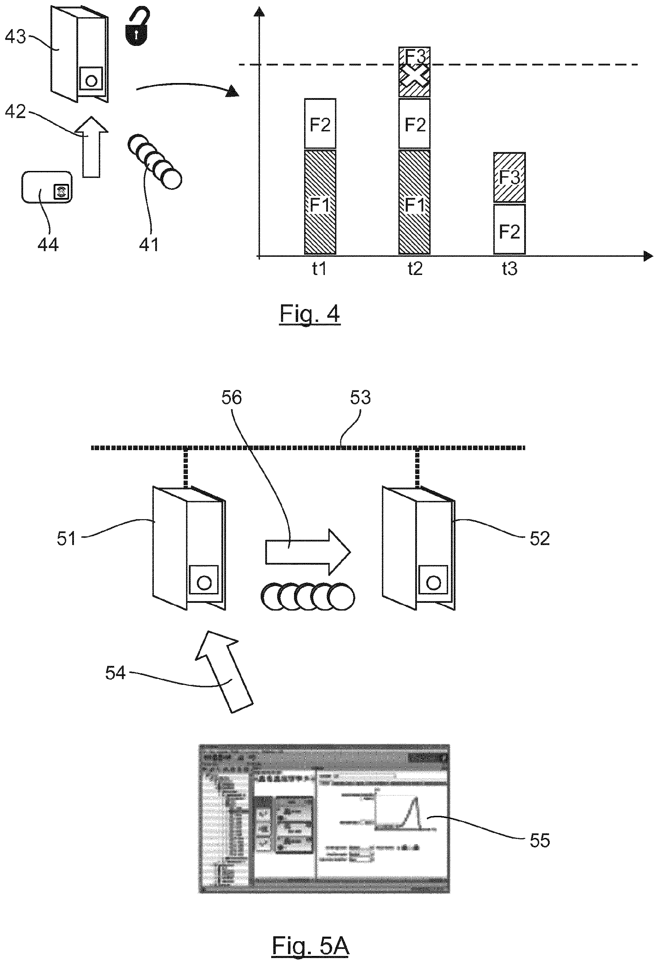

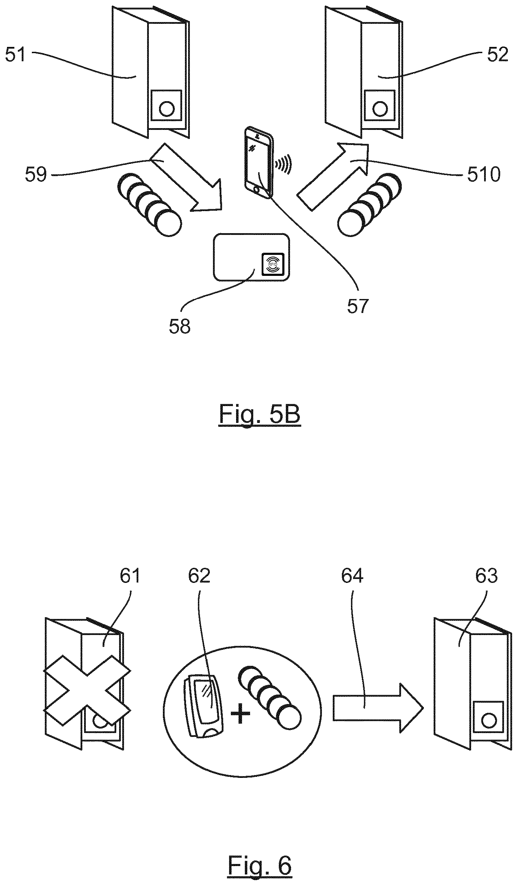

Il est important de noter que, selon l'invention, un fonctionnement centralisé, passant par la mémoire M1 d'un gestionnaire (flèche F₁₂ de la figure 1), n'est pas impérative. En effet, il est également prévu que deux concentrateurs 12₁ et 12_{N} peuvent s'échanger directement (flèche F₂₂ de la figure 1) des jetons. C'est pour cette raison que les étapes 33 et 310 indique que les échanges peuvent se faire également avec une mémoire M2' d'un autre concentrateur. Cet aspect est illustré et détaillé plus précisément en lien avec les figures 5A et 5B.

De cette façon, on dispose d'un système simple à mettre en œuvre, non centralisé, un échange rapide pouvant être réalisé par un opérateur entre deux concentrateurs, par exemple voisins, de façon transparente pour le reste du système.

Dans une autre variante, la réaffectation à d'autres fonctionnalités peut se faire à l'intérieur du concentrateur sans passer par le gestionnaire.

Ainsi, comme illustré sur la figure 4, il est possible de gérer l'utilisation d'un nombre de jetons stockés dans la mémoire M2 d'un concentrateur 43, sans intervention du gestionnaire. Dans cet exemple, l'utilisateur a dans un premier temps (instant t1) activé deux fonctionnalités F1 et F2. A un instant t2, il souhaite activer une troisième fonctionnalité F3, et constate que cette activation nécessite un nombre de jetons supérieurs à celui disponible dans la mémoire M2.

Dans ce cas, il peut bien sûr charger (42) de nouveaux jetons 41 contenus dans une carte 44 prévue à cet effet (ou dans la mémoire d'un gestionnaire). Mais il peut également choisir de gérer en interne (au niveau du concentrateur) les jetons disponibles, en désactivant (le cas échéant, temporairement) la fonctionnalité F1, pour activer la fonctionnalité F3, tout en conservant la fonctionnalité F2. De cette façon, à l'instant t3, seules les fonctionnalités F2 et F3 sont activées.

Comme illustré sur les figures 5A et 5B, il est également envisageable d'échanger des jetons entre deux concentrateurs 51 et 52, en fonction des besoins et des réserves de jetons de chacun de ces concentrateurs. Dans ce cas le concentrateur cédant les jetons joue un rôle de gestionnaire.

Dans le mode de réalisation de la figure 5A, ce transfert 56 de jetons se fait via un réseau informatique, par exemple Ethernet, 53, par exemple à réception d'une commande 54 émise par le gestionnaire 55.

Comme illustré sur la figure 5B, l'échange de jetons peut également être effectué via un support de transfert adapté, tel qu'un téléphone ou une tablette 57 ou une carte à puce 58 (qui peuvent le cas échéant assurer un rôle de gestionnaire muni d'une mémoire M1), capable de communiquer, par exemple, sans contact, et qui reçoit (59) des jetons du premier concentrateur 51, pour les transférer (510) vers le concentrateur 52.

L'invention permet également, comme illustré sur la figure 6, de gérer efficacement et simplement la défaillance 61 d'un concentrateur, en transférant (64) sa mémoire M2 62, ou le contenu de sa mémoire M2, vers un concentrateur 63 de remplacement, qui prendra le relais de façon transparente, en ce qui concerne la disponibilité des fonctionnalités optionnelles.

On dispose ainsi d'un système de gestion d'autorisation de mises en œuvre de fonctionnalités optionnelles particulièrement simple et efficace. En effet, l'utilisateur, une fois qu'il dispose des jetons nécessaires, peut effectuer à sa guise l'attribution des fonctionnalités dont il a besoin, que ce soit pour les tester, les utiliser ponctuellement pour un besoin spécifique, les transférer d'un outillage à un autre, ...

La gestion est également simplifiée pour le fabricant, ou le fournisseur, puisqu'il n'a pas besoin d'avoir connaissance des fonctionnalités mises en œuvre à un instant donné : il ne fournit que des jetons indifférenciés.

Les fonctionnalités étant préinstallées, et activables lorsque le nombre de jetons requis est présent, les interventions et les mises à jour sont réduites. La gestion est également simplifiée du fait que, si l'utilisateur a un besoin de nouvelles fonctionnalités sans vouloir supprimer celles qu'il utilise déjà, il suffit de se procurer de nouveaux jetons.

La mise à jour est également simple, puisque les jetons peuvent présenter une date de péremption.

On peut prévoir un mécanisme d'alerte, quelques jours ou semaines à l'avance, pour permettre à l'utilisateur d'obtenir de nouveaux jetons, pour remplacer ceux devenus obsolètes.

## Revendications

1. Procédé de gestion de fonctionnalités optionnelles (fᵢ) dans un système de vissage mettant en œuvre un parc d'au moins deux concentrateurs (12₁, ..., 12_{N}) contrôlant chacun au moins un équipement de production (131, 132, 133, 134), et pouvant être utilisé avec au moins une fonctionnalité optionnelle (fᵢ),
des jetons indifférenciés (45) étant stockés dans chacun desdits concentrateurs (12₁, ..., 12_{N}),
**caractérisé en ce qu'**en ce qu'on attribue à ladite au moins une fonctionnalité optionnelle (fᵢ) un poids prédéfini, correspondant à un nombre de jetons, ladite au moins une fonctionnalité optionnelle étant préinstallée et désactivée dans ledit concentrateur,
**en ce que** ladite au moins une fonctionnalité peut être sélectivement activée (34) sur ledit concentrateur, à la condition (35) que le concentrateur dispose d'un nombre de jetons supérieur au poids de ladite fonctionnalité, une quantité de jetons correspondant au poids de ladite fonctionnalité étant débitée (33) dudit nombre de jetons dont dispose le concentrateur,
**en ce que** ladite au moins une fonctionnalité peut être sélectivement désactivée (39), lesdits jetons correspondant au poids de ladite fonctionnalité étant alors rendu libre d'usage (310),
et **en ce que** des transferts (F₂₂) de jetons indifférenciés peuvent être effectués entre deux desdits concentrateurs.

2. Procédé de gestion de fonctionnalités selon la revendication 1, **caractérisé en ce que** lesdites fonctionnalités (fᵢ) comprennent des fonctionnalités de programmation et/ou de séquençage d'une opération de vissage.

3. Procédé de gestion de fonctionnalités selon l'une quelconque des revendications 1 et 2, **caractérisé en ce que** lesdites fonctionnalités (fᵢ) appartiennent au groupe comprenant :
- l'activation d'au moins un équipement de production ;
- les stratégies de vissage, définissant une séquence d'étapes, définies chacune par un couple, une vitesse et/ou un angle de vissage ;
- les nombres maximaux d'étapes pour une stratégie de vissage ;
- les nombres maximaux de stratégies de vissage disponibles ;
- au moins un séquençage d'un ensemble d'opérations de vissage ;
- au moins une synchronisation de vissage entre au moins deux outils de vissage ;
- les opérations de traçabilité d'une opération de vissage et/ou d'un ensemble d'opérations de vissage ;
- les opérations d'analyse et/ou de contrôle d'une opération de vissage et/ou d'un ensemble d'opérations de vissage ;
- les modifications de la capacité de stockage en mémoire ;
- la personnalisation à un protocole de communication spécifique.

4. Procédé de gestion de fonctionnalités selon l'une quelconque des revendications 1 à 3, **caractérisé en ce que** chacun desdits jetons portent une date de péremption (22) et/ou une durée d'utilisation maximale, au-delà de laquelle il devient sans valeur.

5. Procédé de gestion de fonctionnalités selon l'une quelconque des revendications 1 à 4, **caractérisé en ce que** chacun desdits jetons portent une date de blocage de transfert et/ou un nombre de transferts maximal, au-delà duquel il ne peut plus être transféré.

6. Procédé de gestion de fonctionnalités selon l'une quelconque des revendications 1 à 5, **caractérisé en ce qu'**il comprend une étape de stockage, dans une unité de gestion centralisée (11), d'une table (T1) d'attribution de jetons à chacun desdits concentrateurs et/ou à chacune desdites fonctionnalités, et/ou de disponibilité de jetons dans chacun desdits concentrateurs.

7. Système de vissage mettant en œuvre un parc d'au moins deux concentrateurs (12₁, ..., 12_{N}) contrôlant chacun au moins un équipement de production (131, 132, 133, 134), ledit au moins un concentrateur pouvant être utilisé avec au moins une fonctionnalité optionnelle (fᵢ),
lesdits concentrateurs (12₁, ..., 12_{N}) stockant chacun des jetons indifférenciés, **caractérisé en ce qu'**au moins une fonctionnalité optionnelle (fᵢ) est préinstallée et désactivée dans ledit concentrateur (12₁, ..., 12_{N}), un poids prédéfini, correspondant à un nombre de jetons, étant attribué à ladite au moins une fonctionnalité optionnelle (fᵢ), **en ce que** ledit concentrateur (12₁, ..., 12_{N}) peut sélectivement activer ladite au moins une fonctionnalité (fᵢ), à la condition que le concentrateur dispose d'un nombre de jetons supérieur au poids de ladite fonctionnalité, les jetons correspondant au poids de ladite fonctionnalité (fᵢ) étant débité dudit nombre de jetons dont dispose le concentrateur (12₁, ..., 12_{N}),
**en ce que** ledit concentrateur (12₁, ..., 12_{N}) peut sélectivement désactiver ladite au moins une fonctionnalité (fᵢ), lesdits jetons correspondant au poids de ladite fonctionnalité (fᵢ) étant alors rendu libre d'usage,
et **en ce que** deux desdits concentrateurs (12₁, ..., 12_{N}) peuvent se transférer l'un à l'autre des jetons.

8. Système de vissage selon la revendication 7, **caractérisé en ce que** au moins un dispositif gestionnaire (11) dudit parc de concentrateurs (12₁, ..., 12_{N}) dispose d'une première mémoire de stockage (M1) apte à stocker des jetons indifférenciés,
et **en ce que** chacun des concentrateurs (12₁, ..., 12_{N}) est associé à une deuxième mémoire (M2₁, ..., M2_{N}) de stockage de jetons apte à échanger des jetons d'une part avec ladite première mémoire électronique (M1) et d'autre part avec ladite deuxième mémoire (M2₁, ..., M2_{N}) d'un autre concentrateur.

9. Système de vissage selon la revendication 8, **caractérisé en ce que** ledit gestionnaire (11) appartient au groupe comprenant :
- les automates industriels ;
- les serveurs ;
- les ordinateurs ;
- les cartes mémoires ;
- les tablettes ;
- les clés USB ;
- les concentrateurs.

10. Système de vissage selon l'une quelconque des revendications 7 à 9, **caractérisé en ce que** ledit concentrateur (12₁, ..., 12_{N}) présente une interface homme-machine permettant l'activation d'une desdites fonctionnalités par un opérateur.

11. Système de vissage selon l'une quelconque des revendications 8 ou 9, **caractérisé en ce que** ledit concentrateur (12₁, ..., 12_{N}) permet une activation d'une desdites fonctionnalités par ledit gestionnaire (11).

12. Système de vissage selon l'une quelconque des revendications 8, 9 ou 11, **caractérisé en ce que** ledit transfert de jetons est effectué entre au moins un gestionnaire (11) portant ladite première mémoire électronique (M1) et au moins un concentrateur (12₁, ..., 12_{N}) portant ladite deuxième mémoire électronique (M2₁, ..., M2_{N}) grâce à une liaison filaire, radio et/ou sans contact.

13. Système de vissage selon l'une quelconque des revendications 7 à 12, **caractérisé en ce que** ledit transfert de jetons est effectué entre au moins un premier concentrateur (12₁) portant une mémoire électronique (M2₁) et au moins un deuxième concentrateur (12_{N}) portant une autre mémoire électronique (M2_{N}), via une liaison filaire, radio et/ou sans contact.

14. Système de vissage selon l'une quelconque des revendications 8, 9, 11, 12 ou 13 **caractérisé en ce que** ladite deuxième mémoire (M2₁, ..., M2_{N}) associée à un concentrateur (12₁, ..., 12_{N}) donné est amovible, de façon à pouvoir être montée sur un concentrateur de remplacement, en cas de défaillance dudit concentrateur donné.

15. Système de vissage selon l'une quelconque des revendications 7 à 14, **caractérisé en ce que** ledit concentrateur comprend des moyens d'activation/désactivation (34, 39) desdites fonctionnalités optionnelles (fᵢ), ces opérations créditant ou débitant une deuxième mémoire (M2₁, ..., M2_{N}) de stockage de jetons.

16. Système de vissage selon la revendication 15, **caractérisé en ce que** ledit concentrateur est associé à la deuxième mémoire de stockage de jetons et **en ce qu'**il comprend des moyens de gestion de jetons aptes à échanger des jetons d'une part avec une première mémoire (M1) électronique d'un dispositif gestionnaire (11) dudit parc de concentrateurs et d'autre part avec ladite deuxième mémoire (M2₁, ..., M2_{N}) d'un autre concentrateur (12₁, ..., 12_{N}).

17. Produit programme d'ordinateur, comprenant des instructions de code de programme pour la mise en œuvre d'un procédé selon l'une quelconque des revendications 1 à 6, lorsque ledit programme est exécuté sur un ordinateur.

18. Médium de stockage lisible par ordinateur et non transitoire, stockant un produit programme d'ordinateur selon la revendication 17.

## Patentansprüche

1. Verfahren zur Verwaltung optionaler Funktionen (fᵢ) in einem Verschraubungssystem, das einen Park aus mindestens zwei Konzentratoren (12₁, ..., 12_{N}) einsetzt, die jeweils mindestens eine Produktionsausrüstung (131, 132, 133, 134) steuern, und mit mindestens einer optionalen Funktion (fᵢ) verwendet werden kann,
wobei undifferenzierte Token (45) in jedem der Konzentratoren (12₁, ..., 12_{N}) gespeichert sind,
**dadurch gekennzeichnet, dass** der mindestens einen optionalen Funktion (fᵢ) ein vordefiniertes Gewicht zugewiesen wird, das einer Anzahl von Token entspricht, wobei die mindestens eine optionale Funktion in dem Konzentrator vorinstalliert und deaktiviert ist, und dadurch, dass die mindestens eine Funktion selektiv auf dem Konzentrator unter der Bedingung (35) aktiviert (34) werden kann, dass der Konzentrator über eine Anzahl von Token verfügt, die größer als das Gewicht der Funktion ist, wobei eine Menge von Token, die dem Gewicht der Funktion entspricht, von der Anzahl von Token abgebucht (33) wird, über die der Konzentrator verfügt,
dadurch, dass mindestens eine Funktion selektiv deaktiviert (39) werden kann, wobei die Token, die dem Gewicht der Funktion entsprechen, dann zur Verwendung (310) freigegeben werden,
und dadurch, dass Übertragungen (F₂₂) von undifferenzierten Token zwischen zwei von den Konzentratoren durchgeführt werden können.

2. Verfahren zur Verwaltung von Funktionen nach Anspruch 1, **dadurch gekennzeichnet, dass** die Funktionen (fᵢ) Programmierungs- und/oder Sequenzierungsoperationen eines Verschraubungsvorgangs umfassen.

3. Verfahren zur Verwaltung von Funktionen nach einem der Ansprüche 1 und 2, **dadurch gekennzeichnet, dass** die Funktionen (fᵢ) zu der Gruppe gehören, die umfasst:
- die Aktivierung von mindestens einer Produktionsausrüstung;
- die Verschraubungsstrategien, die eine Folge von Schritten definieren, die jeweils durch ein/e/n Verschraubungsdrehmoment-, -drehzahl und/oder -winkel definiert sind;
- die Höchstanzahlen von Schritten für eine Verschraubungsstrategie;
- die Höchstanzahlen von verfügbaren Verschraubungsstrategien;
- mindestens eine Sequenzierung einer Menge von Verschraubungsvorgängen;
- mindestens eine Verschraubungssynchronisation zwischen mindestens zwei Verschraubungswerkzeugen;
- die Vorgänge zur Nachverfolgbarkeit eines Verschraubungsvorgangs und/oder einer Menge von Verschraubungsvorgängen;
- die Analyse- und/oder Steuerungsvorgänge eines Verschraubungsvorgangs und/oder einer Menge von Verschraubungsvorgängen;
- die Änderungen der Speicherungskapazität im Speicher;
- die Personalisierung auf ein spezifisches Kommunikationsprotokoll.

4. Verfahren zur Verwaltung von Funktionen nach einem der Ansprüche 1 bis 3, **dadurch gekennzeichnet, dass** jedes der Token ein Verfalldatum (22) und/oder eine maximale Verwendungsdauer trägt, nach dem bzw. der es wertlos wird.

5. Verfahren zur Verwaltung von Funktionen nach einem der Ansprüche 1 bis 4, **dadurch gekennzeichnet, dass** jedes der Token ein Übertragungssperrdatum und/oder eine Anzahl maximaler Übertragungen trägt, nach dem bzw. der es nicht mehr übertragen werden kann.

6. Verfahren zur Verwaltung von Funktionen nach einem der Ansprüche 1 bis 5, **dadurch gekennzeichnet, dass** es einen Schritt des Speicherns einer Tabelle (T1) zur Zuweisung von Token zu jedem der Konzentratoren und/oder zu jeder der Funktionen und/oder der Verfügbarkeit von Token in jedem der Konzentratoren in einer zentralisierten Verwaltungseinheit (11) umfasst.

7. Verschraubungssystem, das einen Park aus mindestens zwei Konzentratoren (12₁, ..., 12_{N}) einsetzt, die jeweils mindestens eine Produktionsausrüstung (131, 132, 133, 134) steuern, wobei der mindestens eine Konzentrator mit mindestens einer optionalen Funktion (fᵢ) verwendet werden kann,
wobei die Konzentratoren (12₁,..., 12_{N}) jeweils undifferenzierte Token speichern,
**dadurch gekennzeichnet, dass** mindestens eine optionale Funktion (fᵢ) in dem Konzentrator (12₁,..., 12_{N}) vorinstalliert und deaktiviert ist, wobei ein vordefiniertes Gewicht, das einer Anzahl von Token entspricht, der mindestens einen optionalen Funktion (fᵢ) zugewiesen wird,
dadurch, dass der Konzentrator (12₁,..., 12_{N}) die mindestens eine Funktion (fᵢ) selektiv aktivieren kann unter der Bedingung, dass der Konzentrator über eine Anzahl von Token verfügt, die höher als das Gewicht der Funktion ist, wobei die Token, die dem Gewicht der Funktion (fᵢ) entsprechen, von der Anzahl von Token abgebucht werden, über die der Konzentrator (12₁,..., 12_{N}) verfügt,
und dadurch, dass der Konzentrator (12₁,..., 12_{N}) die mindestens eine Funktion (fᵢ) selektiv deaktivieren kann, wobei die Token, die dem Gewicht der Funktion (fᵢ) entsprechen, dann zur Verwendung freigegeben werden,
und dadurch, dass zwei der Konzentratoren (12₁,..., 12_{N}) Token jeweils aufeinander übertragen können.

8. Verschraubungssystem nach Anspruch 7, **dadurch gekennzeichnet, dass** mindestens eine Verwaltungsvorrichtung (11) des Parks von Konzentratoren (12₁,..., 12_{N}) über einen ersten Speicherungsspeicher (M1) verfügt, der dazu geeignet ist, undifferenzierte Token zu speichern,
und dadurch, dass jeder der Konzentratoren (12₁, ..., 12_{N}) einem zweiten Speicher (M2₁, ..., M2_{N}) zur Speicherung von Token zugewiesen ist, der dazu geeignet ist, Token einerseits mit dem ersten elektronischen Speicher (M1) und andererseits mit dem zweiten Speicher (M2₁, ..., M2_{N}) eines anderen Konzentrators auszutauschen.

9. Verschraubungssystem nach Anspruch 8, **dadurch gekennzeichnet, dass** der Verwalter (11) zu der Gruppe gehört, die umfasst:
- Industrieautomaten;
- Server;
- Computer;
- Speicherkarten;
- Tablets;
- USB-Schlüssel;
- Konzentratoren.

10. Verschraubungssystem nach einem der Ansprüche 7 bis 9, **dadurch gekennzeichnet, dass** der Konzentrator (12₁,..., 12_{N}) eine Mensch-Maschine-Schnittstelle aufweist, die die Aktivierung von einer der Funktionen durch einen Bediener ermöglicht.

11. Verschraubungssystem nach einem der Ansprüche 8 oder 9, **dadurch gekennzeichnet, dass** der Konzentrator (12₁,..., 12_{N}) eine Aktivierung von einer der Funktionen durch den Verwalter (11) ermöglicht.

12. Verschraubungssystem nach einem der Ansprüche 8, 9 oder 11, **dadurch gekennzeichnet, dass** die Übertragung von Token zwischen mindestens einem Verwalter (11), der den ersten elektronischen Speicher (M1) trägt, und mindestens einem Konzentrator (12₁, ..., 12_{N}), der den zweiten elektronischen Speicher (M2₁, ..., M2_{N}) trägt, mittels einer drahtgebundenen, Funk- und/oder kontaktlosen Verbindung durchgeführt wird.

13. Verschraubungssystem nach einem der Ansprüche 7 bis 12, **dadurch gekennzeichnet, dass** die Übertragung von Token zwischen mindestens einem ersten Konzentrator (12₁), der einen elektronischen Speicher (M2₁) trägt, und mindestens einem zweiten Konzentrator (12_{N}), der einen anderen elektronischen Speicher (M2_{N}) trägt, über eine drahtgebundene, Funk- und/oder kontaktlose Verbindung durchgeführt wird.

14. Verschraubungssystem nach einem der Ansprüche 8, 9, 11, 12 oder 13, **dadurch gekennzeichnet, dass** der zweite Speicher (M2₁, ..., M2_{N}), der einem bestimmten Konzentrator (12₁, ..., 12_{N}) zugehörig ist, abnehmbar ist, derart dass er bei einem Ausfall des bestimmten Konzentrators auf einem Ersatzkonzentrator montiert werden kann.

15. Verschraubungssystem nach einem der Ansprüche 7 bis 14, **dadurch gekennzeichnet, dass** der Konzentrator Mittel (34, 39) zur Aktivierung/Deaktivierung der optionalen Funktionen (fᵢ) umfasst, wobei diese Vorgänge einem zweiten Speicher (M2₁, ..., M2_{N}) zur Speicherung von Token gutschreiben oder belasten.

16. Verschraubungssystem nach Anspruch 15, **dadurch gekennzeichnet, dass** der Konzentrator dem zweiten Speicher zur Speicherung von Token zugehörig ist, und dadurch, dass er Mittel zur Verwaltung von Token umfasst, die dazu geeignet sind, Token einerseits mit einem ersten elektronischen Speicher (M1) einer Verwaltungsvorrichtung (11) des Parks von Konzentratoren und andererseits mit dem zweiten Speicher (M2₁,..., M2_{N}) eines anderen Konzentrators (12₁,..., 12_{N}) auszutauschen.

17. Computerprogrammprodukt, das Programmcodeanweisungen für den Einsatz eines Verfahrens nach einem der Ansprüche 1 bis 6 umfasst, wenn das Programm auf einem Computer ausgeführt wird.

18. Maschinenlesbarer und nichtflüchtiger Datenträger, der ein Computerprogrammprodukt nach Anspruch 17 speichert.

## Claims

1. Method for managing optional features (fᵢ) in a screw driving system implementing a group of at least two control hubs (12₁, ..., 12_{N}) each controlling at least one piece of production equipment (131, 132, 133, 134), and being capable of being used with at least one optional feature (fᵢ),
non-differentiated tokens (45) being stored in each of said control hubs (12₁, ..., 12_{N}),
**characterised in that** said at least one optional feature (fᵢ) is assigned a predefined weight, corresponding to a number of tokens, said at least one optional feature being pre-installed and deactivated in said control hub,
**in that** said at least one feature can be selectively activated (34) on said control hub, on the condition (35) that the control hub has a number of tokens available thereto greater than the weight of said feature, a quantity of tokens corresponding to the weight of said feature being debited (33) from said number of tokens available to the control hub,
**in that** said at least one feature can be selectively deactivated (39), said tokens corresponding to the weight of said feature thus being made free for use (310),
and **in that** transfers (F₂₂) of non-differentiated tokens can be carried out between two of said control hubs.

2. Method for managing features according to claim 1, **characterised in that** said features (fᵢ) comprise features for programming and/or sequencing a screw driving operation.

3. Method for managing features according to any one of claims 1 and 2, **characterised in that** said features (fᵢ) belong to the group comprising:
- the activation of at least one piece of production equipment;
- the screw driving strategies, defining a sequence of steps, each defined by a screw driving torque, speed and/or angle;
- the maximum numbers of steps for a screw driving strategy;
- the maximum numbers of screw driving strategies available;
- at least one sequencing of a set of screw driving operations;
- at least one screw driving synchronisation between at least two screw driving tools;
- the traceability operations for a screw driving operation and/or a set of screw driving operations;
- the analysis and/or control operations for a screw driving operation and/or a set of screw driving operations;
- the modifications to the memory storage capacity;
- the customisation for a specific communication protocol.

4. Method for managing features according to any one of claims 1 to 3, **characterised in that** each of said tokens has an expiry date (22) and/or a maximum period of use, after which it becomes worthless.

5. Method for managing features according to any one of claims 1 to 4, **characterised in that** each of said tokens has a block transfer date and/or a maximum number of transfers, beyond which it can no longer be transferred.

6. Method for managing features according to any one of claims 1 to 5, **characterised in that** it comprises a step of storing, in a centralised management unit (11), a table (T1) assigning tokens to each of said control hubs and/or to each of said features, and/or assigning a token availability in each of said control hubs.

7. Screw driving system implementing a group of at least two control hubs (12₁, ..., 12_{N}) each controlling at least one piece of production equipment (131, 132, 133, 134), said at least one control hub being capable of being used with at least one optional feature (fᵢ),
each of said control hubs (12₁, ..., 12_{N}) storing non-differentiated tokens,
**characterised in that** at least one optional feature (fᵢ) is pre-installed and deactivated in said control hub (12₁, ..., 12_{N}) , a predefined weight, corresponding to a number of tokens, being assigned to said at least one optional feature (fᵢ),
**in that** said control hub (12₁, ..., 12_{N}) can selectively activate said at least one feature (fᵢ), on the condition that the control hub has a number of tokens available thereto, greater than the weight of said feature, the tokens corresponding to the weight of said feature (fᵢ) being debited from said number of tokens available to the control hub (12₁, ..., 12_{N}),
**in that** said control hub (12₁, ..., 12_{N}) can selectively deactivate said at least one feature (fᵢ), said tokens corresponding to the weight of said feature (fᵢ) thus being made free for use,
and **in that** two of said control hubs (12₁, ..., 12_{N}) can transfer tokens to one another.

8. Screw driving system according to claim 7, **characterised in that** at least one manager device (11) for managing said group of control hubs (12₁, ..., 12_{N}) has a first storage memory (M1) capable of storing non-differentiated tokens,
and **in that** each of the control hubs (12₁, ..., 12_{N}) is associated with a second token storage memory (M2₁, ..., M2_{N}) capable of exchanging tokens, on the one hand with said first electronic memory (M1) and, on the other hand, with said second memory (M2₁, ..., M2_{N}) of another control hub.

9. Screw driving system according to claim 8, **characterised in that** said manager device (11) belongs to the group comprising:
- industrial automatons;
- servers;
- computers;
- memory cards;
- tablets;
- USB sticks;
- control hubs.

10. Screw driving system according to any one of claims 7 to 9, **characterised in that** said control hub (12₁, ..., 12_{N}) has a man-machine interface allowing one of said features to be activated by an operator.

11. Screw driving system according to any one of claims 8 or 9, **characterised in that** said control hub (12₁, ..., 12_{N}) allows one of said features to be activated by said manager device (11).

12. Screw driving system according to any one of claims 8, 9 or 11, **characterised in that** said transfer of tokens is carried out between at least one manager device (11) bearing said first electronic memory (M1) and at least one control hub (12₁, ..., 12_{N}) bearing said second electronic memory (M2₁,..., M2_{N}) by means of a wired, radio and/or contactless link.

13. Screw driving system according to any one of claims 7 to 12, **characterised in that** said transfer of tokens is carried out between at least one first control hub (12₁) bearing an electronic memory (M2₁) and at least one second control hub (12_{N}) bearing another electronic memory (M2_{N}), via a wired, radio and/or contactless link.

14. Screw driving system according to any one of claims 8, 9, 11, 12 or 13, **characterised in that** said second memory (M2₁, ..., M2_{N}) associated with a given control hub (12₁, ..., 12_{N}) is removable, such that it can be mounted on a replacement control hub, should said given control hub malfunction.

15. Screw driving system according to any one of claims 7 to 14, **characterised in that** said control hub comprises means for activating/deactivating (34, 39) said optional features (fᵢ), these operations crediting or debiting a second token storage memory (M2₁, ..., M2_{N}) .

16. Screw driving system according to claim 15, **characterised in that** said control hub is associated with the second token storage memory and **in that** it comprises token management means capable of exchanging tokens on the one hand with a first electronic memory (M1) of a manager device (11) managing said group of control hubs, and on the other hand with said second memory (M2₁,..., M2_{N}) of another control hub (12₁, ..., 12_{N}) .

17. Computer program product comprising program code instructions for implementing a method according to any one of claims 1 to 6, when said program is executed on a computer.

18. Non-transitory computer-readable storage medium storing a computer program product according to claim 17.
